# EUROPEAN PATENT SPECIFICATION

(11) **EP 4 467 467 B1**
(45) Date of publication and mention of the grant of the patent: **29.07.2026**
(21) Application number: 23175516.6
(22) Date of filing: 25.05.2023
(51) Int. Cl.: B64F 5/60, B64D 45/00

(54) **METHOD AND APPARATUS FOR IDENTIFYING AN AIRCRAFT**
VERFAHREN UND VORRICHTUNG ZUR IDENTIFIZIERUNG EINES FLUGZEUGS
PROCÉDÉ ET APPAREIL D'IDENTIFICATION D'UN AÉRONEF

(43) Date of publication of application: 27.11.2024
(73) Proprietor: B/E Aerospace, Inc., Winston-Salem, NC 27105 (US)
(72) Inventor: REMEEUS, Richard, Houten 3992 AD (NL)
(74) Representative: Dehns

(56) References cited:
- EP-A1- 4 089 653
- EP-A1- 4 138 060
- US-A1- 2010 010 708
- US-A1- 2013 159 205
- US-A1- 2013 321 122
- US-A1- 2022 065 631

## Description

### Technical Field

This disclosure relates to a method and apparatus for identifying an aircraft using an inertial measurement unit located on the aircraft. In particular, the disclosure relates to a method and apparatus for identifying an aircraft by comparing data from the inertial measurement unit with flight data associated with a known aircraft.

### Background

Typical aircraft carry many individual pieces of equipment. It may be difficult for airline companies to track which pieces of equipment are located on each aircraft. For example, galley components such as coffee machines and ovens may be moved between aircrafts when required. It may therefore be difficult to determine on which aircraft any given coffee machine or oven is located.

This may be a problem if a piece of equipment needs to be replaced or repaired. The crew on board an aircraft are busy during the flight and may not have time to relay information to the ground about problems with the equipment. Therefore, it is desirable to have a method for identifying which aircraft an item is located on which does not require any effort from the people on-board the aircraft.

Furthermore, commercial aircraft typically have busy schedules with short turnaround times. If a piece of equipment needs to be replaced or repaired, it would typically be required for the replacement part(s) and/or the engineer to be ready to start work when the plane lands at its destination. Therefore, it is desirable to have a method for identifying which aircraft an item is located on while a flight is taking place.

EP 4 138 060 A1 provides a method for confirming the location of an aircraft by providing a position confirmation signal to be compared with an independent position signal.

### Summary of the Disclosure

According to an example of the present disclosure, there is provided a method of identifying an aircraft according to claim 1.

The method thus collects data from the sensor and this data (e.g. along with the timing data, from the periodic transmission and/or the associated timestamp) is compared against flight data, with which a known aircraft (i.e. an aircraft with an assigned identity) is associated. This allows the aircraft on which the unit is located to be identified by assigning the identity of the known aircraft to the aircraft being identified.

Thus, in some examples, the method comprises comparing the data with flight data associated with a known aircraft to thereby identify the aircraft (on which the unit is located). In some examples the method comprises identifying the aircraft (on which the unit is located), e.g. using the comparison of the data with the flight data associated with the known aircraft.

The unit may be any suitable and desired type. In some examples, the component(s) of the unit (e.g. the sensor) may be located proximal to one another on the aircraft (e.g. in a housing of the unit). In some examples, the component(s) of the unit (e.g. the sensor) may not be located proximal to one another on the aircraft. Instead, the component(s) may be configured to operate together as a unit (e.g. through wireless connections).

The unit may be located in any suitable and desired location on the aircraft. In some examples, the unit may be located in the cabin of the aircraft. In some examples, the unit may be part of a larger component of the aircraft. For example, the unit may be part of a galley component, such as a coffee machine or oven.

The physical parameter of the aircraft may be any suitable and desired physical parameter which relates to the aircraft and/or the flight of the aircraft. In some examples, the physical parameter may relate to the aircraft itself. For example, the physical parameter may comprise the vibration of at least one component of the aircraft, the ambient temperature inside the aircraft and/or the ambient pressure inside the cabin of the aircraft. In some examples, the physical parameter may relate to the flight of the aircraft. For example, the physical parameter may comprise the orientation of the aircraft, the location of the aircraft and/or the acceleration of the aircraft.

The sensor may be any suitable and desired type. In some examples, the unit comprises a plurality of sensors. In some examples, the unit comprises a plurality of sensors each configured to measure a different physical parameter of the aircraft.

The sensor(s) may be configured to output data in any suitable and desired format and unit. In some examples, the sensor(s) may be configured to output data periodically (e.g. at a certain (e.g. predefined) frequency). In some examples, the sensor(s) may have a processor configured to output the data with metadata such as the actual or relative time of the measurement(s).

In some examples, the unit may be configured to determine the actual or relative time of the measurement(s). For example, if data is stored and/or transmitted at regular intervals (e.g. 1 Hz), the number of times that the data has been stored and/or transmitted may be counted (e.g. by a message counter) and used to determine the time that has elapsed since the first data piece of data was stored and/or transmitted. In some examples, the data may be stored and/or transmitted with timing information indicating the relative time that has elapsed since the first data piece of data was stored and/or transmitted.

The unit may be configured to provide data relating to the measurement in any suitable and desired manner. In some examples, the sensor may be configured to provide an output (e.g. a digital measurement of a physical parameter). In some examples, the unit may be configured to measure a parameter (e.g. current and/or voltage) which relates to the physical parameter (e.g. measured by the sensor).

The flight data may be any suitable and desired type of data. In some examples, the flight data may be obtained from a publicly available source, e.g. a publicly accessible database of flight data, e.g. ADS-B Exchange data. In some examples, the flight data may be from a private source (e.g. only accessible to a company or authorised parties). In some examples, the flight data may include information from a plurality of aircraft and/or flights.

In some examples, comparing the data with flight data associated with a known aircraft may include finding the closest match between the data. In some examples, the data may be determined to match within a (e.g. predetermined) tolerance. In some examples, the tolerance may be chosen to produce a certain confidence level of producing a match to a known aircraft.

Comparing the data with flight data associated with a known aircraft may be performed at any suitable and desired time. In some examples, the data may be gathered, e.g. from multiple (e.g. consecutive) flights, and the comparison may be performed at a later point in time. In some examples, the comparison may be performed in 'real-time' (e.g. while the flight is taking place). For example, the unit may be configured to transmit data to a processor while the flight is taking place.

In some examples, it may be advantageous to compare the data with flight data associated with a known aircraft in 'real-time' (e.g. while the flight is taking place) because this may allow the location of the unit to be identified before (or shortly after) the flight lands.

In some examples, the data is stored on the aircraft. The data may be stored in any suitable and desired format. The memory may be any suitable and desired type. In some examples, the memory is a non-volatile memory. This may be advantageous in examples where the equipment may be switched off (e.g. between flights or during take-off and/or landing). In some examples, the memory may be configured to store data from a plurality of flights.

In some examples, the data may be retrieved from the aircraft at a later time. For example, the data may be copied or transferred to another storage device which is taken elsewhere for analysis of the data.

In some examples, the data may be stored and transmitted. For example, the data may be stored until the end of the flight and transmitted when the plane has landed. In other examples, the data may be stored in order to be collated with other (e.g. subsequent) data, and transmitted as part of a larger bundle of data at a later point in time.

In some examples, the data may be stored and/or transmitted at regular intervals with a timestamp (e.g. indicating the absolute time).

In some examples, the unit comprises a real time clock arranged to produce a timestamp; and
wherein the data is stored and/or transmitted with an associated timestamp produced by the real time clock.

A real time clock may be configured to measure time relative to any desired time zone. A real time clock may be configured to measure time to any suitable and desired accuracy. For example, a real time clock may be arranged to produce a timestamp in the format of hours, minutes and seconds (e.g. HH:MM:SS). In some examples, the real time clock may be configured to produce a timestamp which includes the date. The real time clock may be configured to produce a timestamp at any suitable and desired interval. In some examples, the real time clock may be configured to produce a timestamp at substantially the same frequency that the sensor is configured to output data relating to the measurement.

In some examples, the (e.g. unit on the) aircraft comprises a processor configured to receive data from the sensor and, e.g., the real time clock. The processor may be configured to combine the data from the sensor and the real time clock or an internal clock of the processor, such that the sensor data is stored and/or transmitted with an associated timestamp. The processor may be any suitable and desired type. In some examples, the processor may be part of the sensor (e.g. an integral processor) or may be a separate processor (e.g. a CPU, e.g. of the unit).

In some examples, the method further includes processing the data to determine one or more flight phases (of the aircraft to be identified); and
comparing the data with flight data associated with a known aircraft comprises comparing at least one feature of the one or more flight phases with flight data associated with a known aircraft.

The data collected from the unit may be processed to determine the flight phase(s) in any suitable and desired way. The acceleration, vibration, temperature, location, orientation and/or altitude of the aircraft may be used to determine the phases of the flight (e.g. based on the expected values and/or change of at least one of these variables during a certain flight phase).

For example, the following data may correspond to the following flight phases. During taxiing, the orientation of the plane is expected to be horizontal and the acceleration is expected to be very low. As the plane moves down the runway during take-off, the acceleration is expected to increase rapidly in a single direction and the vibration is expected to be high. During take-off, the orientation of the plane is expected to be angled upwards and the altitude of the plane is expected to increase. During cruising, the vibration and acceleration are expected to be low and the altitude should be substantially constant. During decent, the orientation of the plane is expected to be angled downwards and the altitude of the plane is expected to decrease. During landing, the vibration is expected to be high and a rapid deceleration is expected.

In some examples, the acceleration, vibration, temperature, location, orientation and/or altitude of the aircraft may be compared to threshold values associated with each flight phase in order to determine the flight phase of the aircraft. In some examples, the acceleration, vibration, temperature, location, orientation and/or altitude of the aircraft may be compared to data from previous flights (e.g. a reference data set) in order to determine the flight phase of the aircraft.

In some examples, the data collected from an inertial measurement unit (IMU) alone is sufficient to determine the flight phase of the aircraft. The IMU may be configured to measure the acceleration, vibration and orientation of the aircraft (or data collected by the IMU may be used to determine such parameters). In some examples, this may be enough information to determine, within a tolerance, the flight phase of the aircraft.

In some examples, the one or more flight phases comprise one or more of taxiing, take-off, cruising, descent, final approach and/or landing. Any number of flight phases may be determined in the method. The one or more flight phases may be defined according to any suitable and desired criteria. In some examples, the one or more flight phases may be defined by national or international aviation standards.

In some examples, processing the data to determine the one or more flight phases comprises determining the duration of at least one (e.g. all) of the one or more flight phases. The duration of at least one of the one or more flight phases may be determined from the actual time (e.g. provided by a real time clock) or from the relative time (e.g. provided by an internal clock or by counting the messages received from the sensor(s) (e.g. using a message counter)). The duration of the one or more flight phases may be measured to any suitable and desired accuracy. In some examples, the duration of at least one of the one or more flight phases may be suitable (e.g. may be used) for uniquely identifying the aircraft, which may determine the accuracy required.

In some examples, the flight data associated with a known aircraft comprises the duration of at least one (e.g. all) of the one or more flight phases. In some examples, the flight data associated with a known aircraft comprises the same flight phase(s) as those determined by the unit.

In some examples, comparing the flight phase(s) with flight data associated with a known aircraft comprises comparing the duration of at least one (e.g. all) of the one or more flight phases. The duration of the at least one of the one or more flight phases may be unique to each flight. Therefore, comparing the duration of at least one of the one or more flight phases determined by the unit to the duration of at least one of the flight phases associated with a known aircraft may help to determine whether the unit was located on the known aircraft during a particular flight.

In some examples, the flight data associated with a known aircraft comprises at least one (e.g. all) of the aircraft registration number, the manufacturer of the aircraft, the model of the aircraft, the airline operating the aircraft, the departure location, the arrival location and/or the flight number. The flight data associated with a known aircraft may include any information which allows the aircraft to be uniquely identified. For example, the combination of the departure location, arrival location and time of departure may allow an aircraft to be uniquely identified. In another example, the aircraft registration number alone may allow an aircraft to be uniquely identified.

In some examples, the flight data associated with a known aircraft may include one or more of the following variables: the planned and/or actual flight path, the altitude, the speed, the acceleration, the orientation and/or the vibration of the known aircraft. In some examples, at least one of these variables may be used in a (e.g. direct) comparison with data collected by the unit. For example, the altitude over time may be unique to each flight. Therefore, comparing the altitude measured by the unit to the altitude associated with a known aircraft may help to determine whether the unit was located on the known aircraft during a particular flight. In some examples, at least one of these variables may be used to determine the flight phase(s) of the known aircraft.

In some examples, the sensor comprises one or more of: an inertial measurement unit; a pressure sensor; a gyroscope; a vibration sensor; a magnetometer; a compass; an accelerometer; and/or a temperature sensor. The unit may include any number of sensors and/or any combination of sensors.

In some examples, the unit comprises a gyroscope. In some examples, the gyroscope is configured to measure the orientation of the aircraft, e.g. along three axial directions (e.g. the x, y and z axes). In some examples, the orientation of the aircraft may be used in a (e.g. direct) comparison with flight data associated with a known aircraft. In some examples, the orientation of the aircraft may be used to determine a feature (e.g. the flight path and/or flight phase) of the aircraft, which may be used in a comparison with flight data associated with a known aircraft. In some examples, the orientation (e.g. change in orientation over time) may be used to determine turns of the aircraft.

In some examples, the unit comprises an accelerometer. In some examples, the accelerometer is configured to measure the acceleration of the aircraft, e.g. along three axial directions (e.g. the x, y and z axes). In some examples, the magnitude and/or direction of the acceleration may be used to identify an aircraft. In some examples, the acceleration of the aircraft may be used in a (e.g. direct) comparison with flight data associated with a known aircraft. In some examples, the acceleration of the aircraft may be used to determine a feature (e.g. the flight path and/or flight phase) of the aircraft, which may be used in a comparison with flight data associated with a known aircraft.

In some examples, the unit comprises a magnetometer. In some examples, the magnetometer may be configured to measure the direction and/or strength of a magnetic field (e.g. the Earth's magnetic field) e.g. as a three-dimensional vector. In some examples, the magnetometer may comprise a compass configured to measure the direction of the Earth's magnetic field. In some examples, the direction and/or strength of a magnetic field at the location of the aircraft may be used in a (e.g. direct) comparison with flight data associated with a known aircraft. In some examples, the direction and/or strength of a magnetic field at the location of the aircraft may be used to determine a feature (e.g. the flight path and/or flight phase) of the aircraft, which may be used in a comparison with flight data associated with a known aircraft.

In some examples, the accelerometer and the gyroscope may be part of an inertial measurement unit (IMU). In some examples, the accelerometer, the gyroscope and magnetometer may be part of an inertial and magnetic measurement unit (IMMU). In some examples, the unit comprises a vibration sensor. The vibration sensor may be configured to measure the frequency and/or amplitude of vibrations. The vibration sensor may be mounted to any suitable and desired surface of the unit and/or the aircraft, such that it is able to measure the vibration of a desired part of the aircraft. In some examples, the frequency and/or amplitude of vibrations of (e.g. a component of) the aircraft may be used in a (e.g. direct) comparison with flight data associated with a known aircraft. In some examples, the frequency and/or amplitude of vibrations of (e.g. a component of) the aircraft may be used to determine a feature (e.g. the flight path and/or flight phase) of the aircraft, which may be used in a comparison with flight data associated with a known aircraft.

In some examples, the unit comprises a pressure sensor. The pressure sensor may be any suitable and desired type. In some examples, the pressure sensor is configured to measure the ambient pressure of the air surrounding the pressure sensor. In examples where the pressure sensor is located in the cabin of the aircraft, the pressure sensor may measure the cabin pressure.

The ambient pressure may decrease with altitude. Therefore, measuring the ambient pressure may help to determine the altitude of the aircraft. The altitude may be used to help determine the flight phase of the aircraft and/or to help compare the data from the unit with flight data from known aircraft.

In some examples, the unit comprises a temperature sensor. The temperature sensor may be any suitable and desired type. In some examples, the temperature sensor is configured to measure the ambient temperature of the air surrounding the temperature sensor. In examples where the temperature sensor is located in the cabin of the aircraft, the temperature sensor may measure the temperature of the cabin.

In some examples, the ambient temperature may decrease with altitude. Therefore, measuring the ambient temperature may help to determine the altitude of the aircraft. The altitude may be used to help determine the flight phase of the aircraft and/or to help compare the data from the unit with flight data from known aircraft.

In some examples, the method further includes processing the data to determine the flight path; and
comparing the data with flight data associated with a known aircraft comprises comparing at least one feature of the flight path with flight data associated with a known aircraft.

In some examples, the flight data associated with a known aircraft may include the planned and/or actual flight path. The planned and/or actual flight path may include information about the location, orientation, vibration, altitude and/or speed of the aircraft.

The planned flight path may comprise the typical or average route taken by aircraft between destinations. The planned flight path may comprise the actual route planned for a specific flight between destinations (e.g. considering weather conditions for that specific flight). In some examples, features of the planned flight path may be used to compare the data from the unit to the flight data associated with a known aircraft (e.g. comparing, within a tolerance, the planned flight path to the actual flight path detected by the unit).

The actual flight path may comprise the actual route taken by a known aircraft between destinations. In some examples, the actual flight path may be unique to a particular flight. In some examples, features of the actual flight path may be used to compare the data from the unit to the flight data associated with a known aircraft. For example, the specific turns taken during a flight (e.g. including the orientation and/or location of the aircraft), may be used to compare, within a tolerance, the actual flight path data associated with a known aircraft to the flight path detected by the unit.

In some examples, the aircraft comprises a second unit located on the aircraft, wherein the second unit comprises a sensor;
wherein the method further comprises:
the sensor of the second unit measuring a physical parameter relating to the aircraft; and
the second unit providing data relating to the measurement;
storing the data and/or transmitting the data from the second unit;
   wherein the data from the second unit is stored and/or transmitted periodically and/or with an associated timestamp; and
comparing the data from the two units to determine the location of the two units with respect to one another.

In some examples, the second unit may be substantially identical to the first unit (e.g. having the same sensor(s), the same processing capabilities). However, in some examples the second unit may differ from the first unit, in any suitable and desired way.

In some examples, the data from the two units is compared at a location external to the units. For example, the two units may be configured to (e.g. wirelessly) transmit the data to a processor that is remote from the aircraft.

The difference between the data collected from the two units may be used to determine the location of the units with respect to one another. For example, if the data from the two units is substantially the same (e.g. within a predetermined tolerance), then it may be possible to determine that the two units are located on the same aircraft.

In some examples, it may be possible to determine the relative location of the two units on the aircraft. For example, during take-off a unit at the front of the aircraft has higher altitude than a unit at the back of the aircraft, whereas during landing a unit at the back of the aircraft has higher altitude than a unit at the front of the aircraft. In some examples, it may be possible to determine the straight-line distance between the two units within the aircraft. For example, if the difference in altitude between the two units is known and the orientation of the aircraft is known, it may be possible to determine that the two units are separated by a certain straight-line distance along the axis of the aircraft.

Any suitable and desired number of units may be located on the aircraft. The location of any number of units (e.g. with respect to one another) may be determined according to the steps of the method above.

In some examples, the aircraft comprises a plurality of units located on the aircraft, wherein each of the plurality of units comprises a sensor;
wherein the method further comprises:
the sensor of each of the plurality of units measuring a physical parameter relating to the aircraft; and
the plurality of units providing data relating to the measurement;
storing the data and/or transmitting the data from the plurality of units;
   wherein the data from the plurality of units is stored and/or transmitted periodically and/or with an associated timestamp; and
comparing the data from the plurality of units to determine the location of the plurality of units with respect to one another.

The features discussed above in relation to a method with two units may apply equally to a method including a plurality of units.

In some examples, the flight data associated with a known aircraft comprises the layout of the known aircraft; and
wherein the method further comprises:
mapping the location of the two units onto the layout of the known aircraft.

In some examples, it may be possible to determine the location of the two units within the aircraft (e.g. within a cabin) by using the layout of the known aircraft. For example, it may be known that the two units are each located within a galley component and separated by a certain straight-line distance (as discussed above). The galley components may be located at certain predetermined points inside the cabin. It may therefore be possible to determine the straight-line distances between the possible locations of the galley components, and determine which of these correspond to the known distance between the two units.

Any number of units may be located on the aircraft. The location of any suitable and desired number of units (e.g. on the layout of the known aircraft) may be determined according to the steps of the method above.

In some examples, the flight data associated with a known aircraft comprises the layout of the known aircraft; and
wherein the method further comprises:
mapping the location of the plurality of units onto the layout of the known aircraft.

The features discussed above in relation to a method with two units may apply equally to a method including any suitable and desired number of units.

According to another example of the present disclosure, there is provided an apparatus for identifying an aircraft according to claim 15.

In some examples, the memory is located on the aircraft. In some examples, the memory is configured as part of the unit (e.g. located on the unit). In some examples, the memory is connected (e.g. wirelessly connected) to the unit.

Any of the features discussed herein relating to the method for identifying an aircraft may also apply to the apparatus for identifying an aircraft, as appropriate, and vice versa.

### Brief Description of the Drawings

Certain examples of the present disclosure will now be described with reference to the accompanying drawings in which:
Figure 1 is a schematic diagram of an apparatus for identifying an aircraft;
Figure 2 is a flow chart of a method of identifying an aircraft; and
Figure 3 is a flow chart of a method of locating a unit on an aircraft.

### Detailed Description

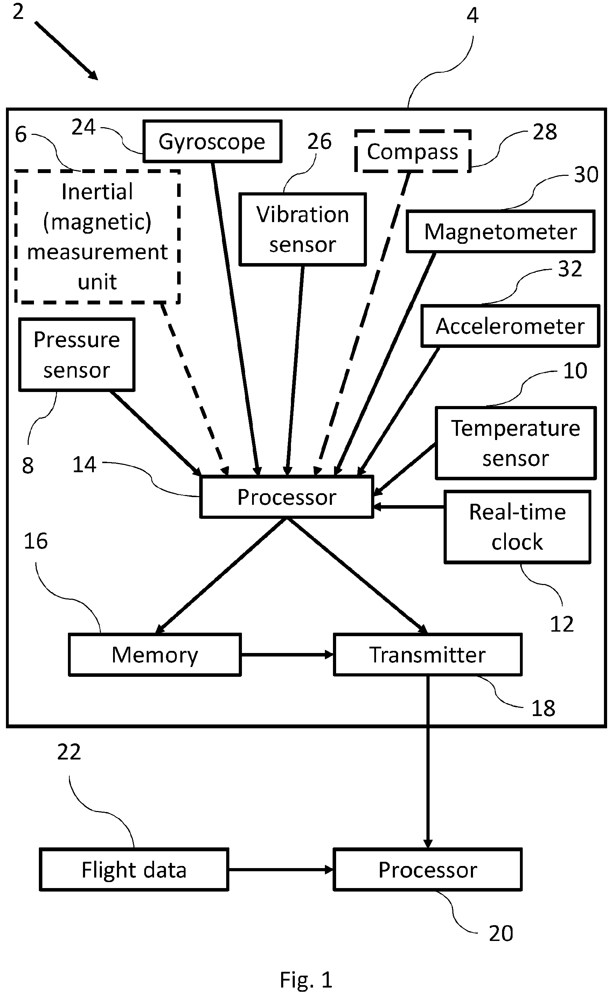

Figure 1 is a schematic diagram of apparatus 2 for identifying an aircraft.

The apparatus 2 includes a unit 4 located on the aircraft. In some examples, the unit 4 may be located in the cabin of the aircraft (e.g. in the galley, seating or storage). Such a galley unit may comprise a coffee machine or oven.

In this example, the unit 4 includes a pressure sensor 8, a temperature sensor 10, a gyroscope 24, a vibration sensor 26, a magnetometer 30, an accelerometer 32, a real-time clock 12, a processor 14, a memory 16 and a transmitter 18.

The sensors shown in Figure 1 are illustrative. Any suitable and desired sensors may be used to make measurements suitable for identifying an aircraft. Any suitable and desired number and/or combination of the sensors of the present example may be used in accordance with examples of the present disclosure.

In some examples, the accelerometer 32 and the gyroscope 24 may be part of an inertial measurement unit (IMU) 6. In some examples, the accelerometer 32, the gyroscope 24 and magnetometer 30 may be part of an inertial and magnetic measurement unit (IMMU) 6.

In this example, the unit 4 includes a gyroscope 24. In some examples, the gyroscope 24 is configured to measure the orientation of the aircraft along three axial directions (e.g. the x, y and z axes).

In this example, the unit 4 includes an accelerometer 32. In some examples, the accelerometer 32 is configured to measure the acceleration of the aircraft along three axial directions (e.g. the x, y and z axes). In some examples, the magnitude and direction of the acceleration may be used to identify an aircraft.

In this example, the unit 4 includes a vibration sensor 26. The vibration sensor 26 may be configured to measure the frequency and/or amplitude of vibrations. The vibration sensor 26 may be mounted to any suitable and desired surface of the unit 4 and/or the aircraft, such that it is able to measure the vibration of a desired part of the aircraft.

In this example, the unit 4 includes a magnetometer 30. In some examples, the magnetometer 30 may be configured to measure the direction and/or strength of a magnetic field (e.g. the Earth's magnetic field) as a three-dimensional vector. In some examples, unit 4 may comprise a compass 28 configured to measure the direction of the Earth's magnetic field.

In this example, the unit 4 includes a pressure sensor 8 configured to measure ambient pressure and a temperature sensor 10 configured to measure ambient temperature. In some examples, the unit 4 may be located in a cabin, such that the pressure 8 may be configured to measure the cabin pressure and the temperature sensor 10 may be configured to measure the temperature of the cabin.

In this example, the sensors are configured to output data (representative of the respective measurements they make) and communicate this data to the processor 14. Each of the sensors may be connected to the processor 14 in any suitable and desired way. For example, they may be connected to the processor 14 through a wired or wireless connection. Each of the sensors may be connected to the processor 14 in a different way, for example. In some examples, at least one of the sensors may include an integrated processor.

In some examples, at least some of the sensors may be configured to output data periodically (e.g. at a particular frequency). Each of sensors may be configured to output data at the same frequency or at different frequencies from each other.

In some examples, the processor 14 may be configured to determine the relative time between measurements from each of the sensors. For example, the processor 14 may be configured to count the number of messages received from each of the sensors (e.g. using a message counter), and use the frequency of the messages or the internal clock of the processor 14 to determine the time elapsed since the first message was received from each of the sensors. Therefore, in some examples timing information for the data may be derived without using a dedicated clock.

In the example shown in Figure 1, the unit 4 includes a real time clock 12. The real time clock 12 is configured to measure elapsed time (e.g. in units of hours, minutes, seconds and/or milliseconds). In some examples, the real time clock 12 may output the time according to a particular time zone rather than the relative time (e.g. since the unit was switched on). In some examples, the real time clock 12 may output the date. The real time clock 12 is configured to output timing information to the processor 14.

In some examples, the processor 14 is configured to package or bundle the data from the sensors and output the package or bundle of data. For example, the processor 14 may be configured to output data at a regular interval (e.g. every second) which includes data which was collected from the sensors and/or the real-time clock 12 within a particular time period (e.g. within the last second). In some examples, each package or bundle of data includes an associated timestamp, (e.g. from the real-time clock or the processor's internal clock).

In this example, the processor 14 is connected to a memory 16 and a transmitter 18. The memory 16 is configured to store data it receives from the processor 14 and the transmitter 18 is configured to transmit data it receives from the processor 14. In some examples, the processor 14 may be configured to send data to the memory 16 and the transmitter 18 (e.g. simultaneously or alternately) at regular intervals and/or with an associated timestamp. In some examples, only one of the memory 16 or the transmitter 18 may be present, such that the processor 14 is configured to send data to only one of the memory 16 or the transmitter 18.

In this example, the memory 16 is connected to the transmitter 18. In some examples, data may be stored on the memory 16 for a period of time (e.g. until the end of the flight) then sent to the transmitter 18 to be transmitted. In some examples, data may be transferred from the memory 16 to another (e.g. portable, removable) device (e.g. at the end of a flight).

In this example, the apparatus 2 further includes a processor 20 that is external to the unit 4. In some examples, the processor 20 may be located on the ground (i.e. not on board the aircraft). The processor 20 may be located at any distance from the unit 4. In some examples, the processor 20 may be connected to a plurality of units 4 located on a plurality of aircraft.

In this example, the transmitter 18 is in communication with the processor 20. In some examples, the connection between the transmitter 18 and the processor 20 is wireless. In some examples, the connection between the transmitter 18 and the processor 20 is provided by a wire. The transmitter 18 may be configured to send data at regular intervals and/or with an associated timestamp.

In some examples, (e.g. in an example where the unit 4 does not include a processor 14) the data from the sensors and/or the real time clock 12 may be sent directly to the memory 16 and/or the transmitter 18 (i.e. without any processing on the unit 4).

In some examples, the processor 20 is configured to process the data to determine one or more flight phases. The one or more flight phases may include one or more of taxiing, take-off, cruising, descent, final approach and/or landing. The processor 20 may use one or more of the acceleration, orientation, magnetic field, vibration, ambient pressure and/or ambient temperature to determine the flight phase. For example, during taxiing the orientation of the plane may be horizontal and the acceleration may be low, whereas during take-off the acceleration may increase and the plane may begin to tilt upwards. In some examples, the ambient pressure and ambient temperature may drop as the altitude of the aircraft increases. This may help to identify whether the aircraft is ascending, cruising or descending.

In some examples, the processor 20 may be configured to determine the duration of the at least one flight phase. In some examples, the processor 20 may be configured to output one or more flight phases and the duration of time spent in each of the one or more flight phases.

In this example, the processor 20 is also configured to receive flight data 22. The flight data 22 is associated with a known aircraft and includes information which can identify the aircraft. For example, the flight data 22 may include at least one of the aircraft registration number, the manufacturer of the aircraft, the model of the aircraft, the airline operating the aircraft, the departure location, the arrival location and/or the flight number. This list is not exhaustive and any suitable and desired information may be used which can uniquely identify an aircraft. Such data may be retrieved from publicly accessible source(s), e.g. a publicly accessible database of flight data, e.g. ADS-B Exchange data.

The flight data 22 also includes information which can be used to compare the known aircraft with the aircraft on which the unit 4 is located. In some examples, the flight data 22 may correspond to the information output from the processor 20. In some examples, the flight data 22 may include one or more flight phases and the duration of time spent in each of the one or more flight phases for at least one known aircraft.

In some examples, the flight data 22 may include data from a plurality of known aircraft. The flight data 22 may be unique to each known aircraft. The processor 20 may be configured to find the closest match between the data from the unit 4 and the flight data 22 from a plurality of known aircraft. If the data from the unit 4 matches (within a tolerance) the flight data 22 from one of the known aircraft, it is likely that the unit 4 is located on that known aircraft. Therefore, the apparatus 2 is configured for identifying an aircraft.

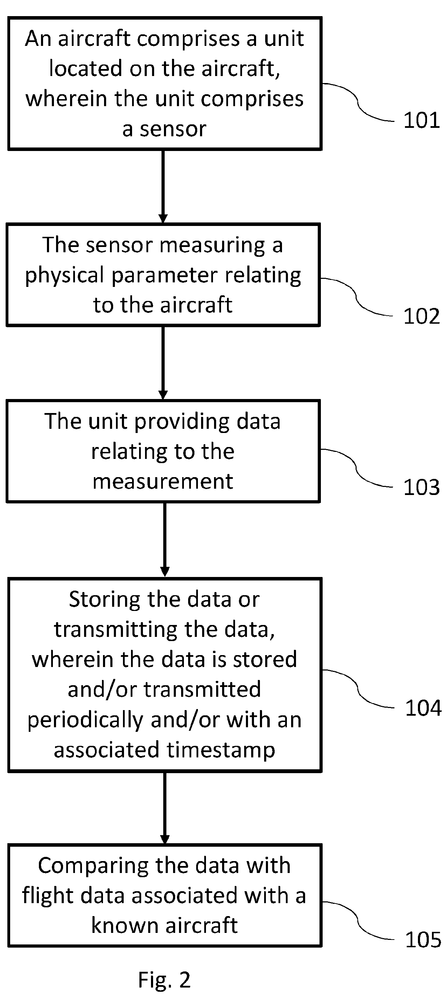

Figure 2 is a flow chart of a method of identifying an aircraft. The aircraft comprises a unit located on the aircraft, wherein the unit comprises a sensor (step 101). The method comprises the steps of: the sensor measuring a physical parameter relating to the aircraft (step 102); the unit providing data relating to the measurement (step 103); storing the data and/or transmitting the data, wherein the data is stored and/or transmitted periodically and/or with an associated timestamp (step 104); and comparing the data with flight data associated with a known aircraft (step 105).

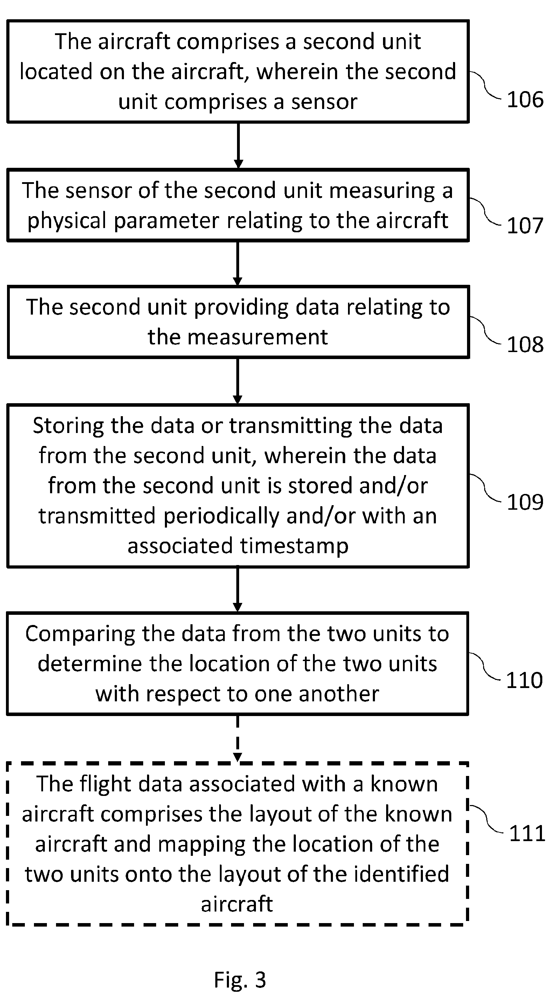

Figure 3 is a flow chart of a method of locating a unit on an aircraft. The method of Figure 3 continues from the method of Figure 2. In this example, the aircraft comprises a second unit located on the aircraft, wherein the second unit comprises a sensor (step 106). In addition to the steps in Figure 2, the method of Figure 3 includes the steps of: the sensor of the second unit measuring a physical parameter relating to the aircraft (step 107); the second unit providing data relating to the measurement (step 108); storing the data and/or transmitting the data from the second unit, wherein the data from the second unit is stored and/or transmitted periodically and/or with an associated timestamp (step 109); and comparing the data from the two units to determine the location of the two units with respect to one another (step 110).

In some examples, the flight data associated with a known aircraft comprises the layout of the known aircraft and the method further comprises the step of mapping the location of the two units onto the layout of the known aircraft (step 111).

## Claims

1. A method of identifying an aircraft, wherein the aircraft comprises a unit (4) located on the aircraft, wherein the unit (4) comprises a sensor (6, 8, 10, 24, 26, 28, 30, 32);
wherein the method comprises:
the sensor (6, 8, 10, 24, 26, 28, 30, 32) measuring a physical parameter relating to the aircraft;
the unit (4) providing data relating to the measurement;
storing the data periodically and/or with an associated timestamp, and/or transmitting the data periodically and/or with an associated timestamp;
the method being **characterised by**:
comparing the data with flight data associated with a known aircraft to identify the aircraft; and
assigning the identity of the known aircraft to the aircraft.

2. The method as claimed in claim 1, wherein the method comprises storing the data on the aircraft.

3. The method as claimed in claim 1 or 2, wherein the unit comprises a real time clock (12) arranged to produce a timestamp; and
the data is stored and/or transmitted with an associated timestamp produced by the real time clock (12).

4. The method as claimed in claim 1, 2 or 3, wherein the method further includes processing the data to determine one or more flight phases; and
comparing the data with flight data associated with a known aircraft comprises comparing at least one feature of the one or more flight phases with flight data associated with a known aircraft.

5. The method as claimed in claim 4, wherein the one or more flight phases comprise one or more of taxiing, take-off, cruising, descent, final approach and/or landing.

6. The method as claimed in claim 4 or 5, wherein processing the data to determine the one or more flight phases comprises determining the duration of at least one of the one or more flight phases.

7. The method as claimed in claim 4, 5 or 6, wherein the flight data associated with a known aircraft comprises the duration of at least one of the one or more flight phases.

8. The method as claimed in claim 7, wherein comparing the one or more flight phases with flight data associated with a known aircraft comprises comparing the duration of at least one of the one or more flight phases.

9. The method as claimed in any of claims 4 to 8, wherein the flight data associated with a known aircraft comprises at least one of the aircraft registration number, the manufacturer of the aircraft, the model of the aircraft, the airline operating the aircraft, the departure location, the arrival location, whether each of the at least one flight phases was performed correctly, the flight path, and/or the flight number.

10. The method as claimed in any preceding claim, wherein the flight data associated with a known aircraft comprises at least one of the planned and/or actual flight path, the altitude, the speed, the acceleration, the orientation, the roll, the pitch, the yaw, and/or the vibration of the known aircraft.

11. The method as claimed in any preceding claim, wherein the sensor (6, 8, 10, 24, 26, 28, 30, 32) comprises one or more of: an inertial measurement unit (6); a pressure sensor (8); a gyroscope (24); a vibration sensor (26); a magnetometer (30); a compass (28); an accelerometer (32); and/or a temperature sensor (10).

12. The method as claimed in any preceding claim, wherein the method further includes processing the data to determine a flight path; and
comparing the data with flight data associated with a known aircraft comprises comparing at least one feature of the flight path with flight data associated with a known aircraft.

13. The method as claimed in claim any preceding claim, wherein the aircraft comprises a second unit located on the aircraft, wherein the second unit comprises a sensor (106);
wherein the method further comprises:
the sensor of the second unit measuring a physical parameter relating to the aircraft (107); and
the second unit providing data relating to the measurement (108);
storing the data and/or transmitting the data from the second unit;
wherein the data from the second unit is stored and/or transmitted periodically and/or with an associated timestamp (109); and
comparing the data from the two units to determine the location of the two units with respect to one another (110).

14. The method as claimed in claim 13, wherein the flight data associated with a known aircraft comprises the layout of the known aircraft; and
wherein the method further comprises:
mapping the location of the two units onto the layout of the known aircraft (111).

15. An apparatus for identifying an aircraft, the apparatus comprising:
a unit (4) located on the aircraft;
wherein the unit (4) comprises a sensor (6, 8, 10, 24, 26, 28, 30, 32);
wherein the sensor (6, 8, 10, 24, 26, 28, 30, 32) is arranged to measure a physical parameter relating to the aircraft; and
wherein the unit (4) is arranged to provide data relating to the measurement;
a memory (16) arranged to store the data wherein the apparatus is arranged to store the data periodically and/or with an associated timestamp, and/or a transmitter (18) arranged to transmit the data wherein the apparatus is arranged to transmit the data periodically and/or with an associated timestamp;
wherein the apparatus is arranged to:
compare the data with flight data associated with a known aircraft to identify the aircraft; and
assign the identity of the known aircraft to the aircraft.

## Patentansprüche

1. Verfahren zur Identifizierung eines Luftfahrzeugs, wobei das Luftfahrzeug eine auf dem Luftfahrzeug befindliche Einheit (4) umfasst, wobei die Einheit (4) einen Sensor (6, 8, 10, 24, 26, 28, 30, 32) umfasst;
wobei das Verfahren umfasst:
Messen, durch den Sensor (6, 8, 10, 24, 26, 28, 30, 32), eines sich auf das Luftfahrzeug beziehenden physischen Parameters;
Bereitstellen, durch die Einheit (4), von sich auf die Messung beziehenden Daten;
periodisches Speichern der Daten und/oder Speichern der Daten mit einem zugeordneten Zeitstempel und/oder periodisches Übertragen der Daten und/oder Übertragen der Daten mit einem zugeordneten Zeitstempel;
wobei das Verfahren **gekennzeichnet ist durch**:
Vergleichen der Daten mit Flugdaten, die mit einem bekannten Luftfahrzeug assoziiert sind, um das Luftfahrzeug zu identifizieren; und
Zuweisen der Identität des bekannten Luftfahrzeugs zu dem Luftfahrzeug.

2. Verfahren nach Anspruch 1, wobei das Verfahren das Speichern der Daten auf dem Luftfahrzeug umfasst.

3. Verfahren nach Anspruch 1 oder 2, wobei die Einheit eine Echtzeituhr (12) umfasst, die dafür eingerichtet ist, einen Zeitstempel zu erzeugen; und
die Daten mit einem zugeordneten Zeitstempel, der durch die Echtzeituhr (12) erzeugt wird, gespeichert und/oder übertragen werden.

4. Verfahren nach Anspruch 1, 2 oder 3, wobei das Verfahren ferner das Verarbeiten der Daten beinhaltet, um eine oder mehrere Flugphasen zu bestimmen; und
das Vergleichen der Daten mit Flugdaten, die mit einem bekannten Luftfahrzeug assoziiert sind, das Vergleichen mindestens eines Merkmals der einen oder mehreren Flugphasen mit Flugdaten, die mit einem bekannten Luftfahrzeug assoziiert sind, umfasst.

5. Verfahren nach Anspruch 4, wobei die eine oder mehreren Flugphasen eines oder mehreres von Rollen, Starten, Reiseflug, Sinkflug, Endanflug und/oder Landen umfassen.

6. Verfahren nach Anspruch 4 oder 5, wobei das Verarbeiten der Daten zum Bestimmen der einen oder mehreren Flugphasen das Bestimmen der Dauer mindestens einer der einen oder mehreren Flugphasen umfasst.

7. Verfahren nach Anspruch 4, 5 oder 6, wobei die mit einem bekannten Luftfahrzeug assoziierten Flugdaten die Dauer mindestens einer der einen oder mehreren Flugphasen umfassen.

8. Verfahren nach Anspruch 7, wobei das Vergleichen der einen oder mehreren Flugphasen mit Flugdaten, die mit einem bekannten Luftfahrzeug assoziiert sind, das Vergleichen der Dauer mindestens einer der einen oder mehreren Flugphasen umfasst.

9. Verfahren nach einem der Ansprüche 4 bis 8, wobei die mit einem bekannten Luftfahrzeug assoziierten Flugdaten mindestens eines von der Luftfahrzeugregistrierungsnummer, dem Hersteller des Luftfahrzeugs, dem Modell des Luftfahrzeugs, der das Luftfahrzeug betreibenden Fluggesellschaft, dem Abflugort, dem Ankunftsort, der Angabe, ob jede der mindestens einen Flugphase korrekt durchgeführt wurde, der Flugbahn und/oder der Flugnummer umfassen.

10. Verfahren nach einem der vorhergehenden Ansprüche, wobei die mit einem bekannten Luftfahrzeug assoziierten Flugdaten mindestens eines von der geplanten und/oder tatsächlichen Flugbahn, der Höhe, der Geschwindigkeit, der Beschleunigung, der Ausrichtung, dem Rollen, dem Nicken, dem Gieren und/oder der Vibration des bekannten Luftfahrzeugs umfassen.

11. Verfahren nach einem der vorhergehenden Ansprüche, wobei der Sensor (6, 8, 10, 24, 26, 28, 30, 32) eines oder mehreres umfasst von: einer inertialen Messeinheit (6); einem Drucksensor (8); einem Gyroskop (24); einem Vibrationssensor (26); einem Magnetometer (30); einem Kompass (28); einem Beschleunigungsmesser (32); und/oder einem Temperatursensor (10).

12. Verfahren nach einem der vorhergehenden Ansprüche, wobei das Verfahren ferner das Verarbeiten der Daten beinhaltet, um eine Flugbahn zu bestimmen; und
das Vergleichen der Daten mit Flugdaten, die mit einem bekannten Luftfahrzeug assoziiert sind, das Vergleichen mindestens eines Merkmals der Flugbahn mit Flugdaten, die mit einem bekannten Luftfahrzeug assoziiert sind, umfasst.

13. Verfahren nach Anspruch irgendeinem vorhergehenden Anspruch, wobei das Luftfahrzeug eine auf dem Luftfahrzeug befindliche zweite Einheit umfasst, wobei die zweite Einheit einen Sensor (106) umfasst;
wobei das Verfahren ferner umfasst:
Messen, durch den Sensor der zweiten Einheit, eines sich auf das Luftfahrzeug beziehenden physischen Parameters (107); und
Bereitstellen, durch die zweite Einheit, von sich auf die Messung beziehenden Daten (108);
Speichern der Daten und/oder Übertragen der Daten von der zweiten Einheit;
wobei die Daten von der zweiten Einheit periodisch und/oder mit einem zugeordneten Zeitstempel gespeichert und/oder übertragen werden (109); und
Vergleichen der Daten von den zwei Einheiten, um die Position der zwei Einheiten in Bezug zueinander zu bestimmen (110).

14. Verfahren nach Anspruch 13, wobei die mit einem bekannten Luftfahrzeug assoziierten Flugdaten das Layout des bekannten Luftfahrzeugs umfassen; und
wobei das Verfahren ferner umfasst:
Abbilden der Position der zwei Einheiten auf das Layout des bekannten Luftfahrzeugs (111).

15. Vorrichtung zur Identifizierung eines Luftfahrzeugs, wobei die Vorrichtung umfasst:
eine auf dem Luftfahrzeug befindliche Einheit (4);
wobei die Einheit (4) einen Sensor (6, 8, 10, 24, 26, 28, 30, 32) umfasst;
wobei der Sensor (6, 8, 10, 24, 26, 28, 30, 32) dafür eingerichtet ist, einen sich auf das Luftfahrzeug beziehenden physischen Parameter zu messen; und
wobei die Einheit (4) dafür eingerichtet ist, sich auf die Messung beziehende Daten bereitzustellen;
einen Speicher (16), der dafür eingerichtet ist, die Daten zu speichern, wobei die Vorrichtung dafür eingerichtet ist, die Daten periodisch und/oder mit einem zugeordneten Zeitstempel zu speichern, und/oder einen Sender (18), der dafür eingerichtet ist, die Daten zu übertragen, wobei die Vorrichtung dafür eingerichtet ist, die Daten periodisch und/oder mit einem zugeordneten Zeitstempel zu übertragen;
wobei die Vorrichtung dafür eingerichtet ist:
die Daten mit Flugdaten, die mit einem bekannten Luftfahrzeug assoziiert sind, zu vergleichen, um das Luftfahrzeug zu identifizieren; und
die Identität des bekannten Luftfahrzeugs dem Luftfahrzeug zuzuweisen.

## Revendications

1. Procédé d'identification d'un aéronef, dans lequel l'aéronef comprend une unité (4) située sur l'aéronef, l'unité (4) comprenant un capteur (6, 8, 10, 24, 26, 28, 30, 32) ;
dans lequel le procédé comprend :
le capteur (6, 8, 10, 24, 26, 28, 30, 32) mesurant un paramètre physique relatif à l'aéronef ;
l'unité (4) fournissant des données relatives à la mesure ;
le stockage des données de manière périodique et/ou avec un horodatage associé, et/ou la transmission des données de manière périodique et/ou avec un horodatage associé ;
le procédé étant **caractérisé par** :
la comparaison des données avec des données de vol associées à un aéronef connu afin d'identifier l'aéronef ; et
l'attribution de l'identité de l'aéronef connu à l'aéronef.

2. Procédé selon la revendication 1, dans lequel le procédé comprend le stockage des données sur l'aéronef.

3. Procédé selon la revendication 1 ou 2, dans lequel l'unité comprend une horloge temps réel (12) agencée pour produire un horodatage ; et
les données sont stockées et/ou transmises avec un horodatage associé produit par l'horloge temps réel (12).

4. Procédé selon la revendication 1, 2 ou 3, dans lequel le procédé inclut en outre le traitement des données pour déterminer une ou plusieurs phases de vol ; et
la comparaison des données avec les données de vol associées à un aéronef connu comprend la comparaison d'au moins une caractéristique de la ou des phases de vol avec des données de vol associées à un aéronef connu.

5. Procédé selon la revendication 4, dans lequel la ou les phases de vol comprennent une ou plusieurs phases parmi roulage, décollage, croisière, descente, approche finale et/ou atterrissage.

6. Procédé selon la revendication 4 ou 5, dans lequel le traitement des données pour déterminer la ou les phases de vol comprend la détermination de la durée d'au moins une de la ou des phases de vol.

7. Procédé selon la revendication 4, 5 ou 6, dans lequel les données de vol associées à un aéronef connu comprennent la durée d'au moins une de la ou des phases de vol.

8. Procédé selon la revendication 7, dans lequel la comparaison de la ou des phases de vol avec des données de vol associées à un aéronef connu comprend la comparaison de la durée d'au moins une de la ou des phases de vol.

9. Procédé selon l'une quelconque des revendications 4 à 8, dans lequel les données de vol associées à un aéronef connu comprennent au moins un élément parmi le numéro d'immatriculation de l'aéronef, le constructeur de l'aéronef, le modèle de l'aéronef, la compagnie aérienne exploitant l'aéronef, le lieu de départ, le lieu d'arrivée, l'indication de la bonne exécution de chacune des phases de vol, la trajectoire de vol et/ou le numéro de vol.

10. Procédé selon l'une quelconque des revendications précédentes, dans lequel les données de vol associées à un aéronef connu comprennent au moins un paramètre parmi la trajectoire de vol prévue et/ou réelle, l'altitude, la vitesse, l'accélération, l'orientation, le roulis, le tangage, le lacet et/ou les vibrations de l'aéronef connu.

11. Procédé selon l'une quelconque des revendications précédentes, dans lequel le capteur (6, 8, 10, 24, 26, 28, 30, 32) comprend un ou plusieurs éléments parmi une unité de mesure inertielle (6) ; un capteur de pression (8) ; un gyroscope (24) ; un capteur de vibrations (26) ; un magnétomètre (30) ; une boussole (28) ; un accéléromètre (32) ; et/ou un capteur de température (10).

12. Procédé selon l'une quelconque des revendications précédentes, dans lequel le procédé inclut en outre le traitement des données pour déterminer une trajectoire de vol ; et
la comparaison des données avec des données de vol associées à un aéronef connu comprend la comparaison d'au moins une caractéristique de la trajectoire de vol avec des données de vol associées à un aéronef connu.

13. Procédé selon la revendication ou l'une quelconque des revendications précédentes, dans lequel l'aéronef comprend une seconde unité située sur l'aéronef, la seconde unité comprenant un capteur (106) ;
le procédé comprenant également :
le capteur de la seconde unité mesurant un paramètre physique relatif à l'aéronef (107) ; et
la seconde unité fournissant des données relatives à la mesure (108) ;
le stockage des données et/ou la transmission des données depuis la seconde unité ;
les données de la seconde unité étant stockées et/ou
transmises périodiquement et/ou avec un horodatage associé (109) ; et
la comparaison des données des deux unités pour déterminer l'emplacement des deux unités l'une par rapport à l'autre (110).

14. Procédé selon la revendication 13, dans lequel les données de vol associées à un aéronef connu comprennent la configuration de l'aéronef connu ; et
le procédé comprenant également :
le mappage de l'emplacement des deux unités sur l'agencement de l'aéronef connu (111).

15. Appareil d'identification d'un aéronef, l'appareil comprenant :
une unité (4) située sur l'aéronef ;
l'unité (4) comprenant un capteur (6, 8, 10, 24, 26, 28, 30, 32) ;
le capteur (6, 8, 10, 24, 26, 28, 30, 32) étant conçu pour mesurer un paramètre physique relatif à l'aéronef ; et
l'unité (4) étant conçue pour fournir des données relatives à la mesure ;
une mémoire (16) conçue pour stocker les données, l'appareil étant conçu pour stocker les données de manière périodique et/ou avec un horodatage associé, et/ou un émetteur (18) conçu pour transmettre les données, l'appareil étant conçu pour transmettre les données de manière périodique et/ou avec un horodatage associé ;
l'appareil étant conçu pour :
comparer les données avec des données de vol associées à un aéronef connu afin d'identifier l'aéronef ; et
attribuer l'identité de l'aéronef connu à l'aéronef.
